# EUROPÄISCHE PATENTSCHRIFT

(11) **EP 3 543 493 B1**
(45) Veröffentlichungstag und Bekanntmachung des Hinweises auf die Patenterteilung: **16.02.2022**
(21) Anmeldenummer: 19163337.9
(22) Anmeldetag: 18.03.2019
(51) Int. Cl.: F01N 3/20

(54) **VERFAHREN UND VORRICHTUNG ZUM ÜBERWACHEN EINER SCR-ABGASNACHBEHANDLUNGSEINRICHTUNG**
METHOD AND DEVICE FOR MONITORING AN SCR EXHAUST GAS TREATMENT DEVICE
PROCÉDÉ ET DISPOSITIF DE SURVEILLANCE D'UN DISPOSITIF DE TRAITEMENT DE GAZ D'ÉCHAPPEMENT PAR SCR

(30) Priorität: 23.03.2018 DE 102018106952
(43) Veröffentlichungstag der Anmeldung: 25.09.2019
(73) Patentinhaber: MAN Truck & Bus SE, 80995 München (DE)
(72) Erfinder: Grünbeck, Thomas, 90439 Nürnberg (DE)
(74) Vertreter: v. Bezold & Partner Patentanwälte - PartG mbB

(56) Entgegenhaltungen:
- EP-A1- 3 139 013
- WO-A1-2013/147653
- WO-A2-2010/065963
- DE-A1-102016 209 533
- US-A1- 2017 051 654

## Beschreibung

Die Erfindung betrifft ein Verfahren und eine Vorrichtung zum Überwachen einer SCR-Abgasnachbehandlungseinrichtung im Hinblick auf das Auftreten eines Ammoniakschlupfzustands.

Zur Reduktion von Stickoxiden in Abgasen von beispielsweise Verbrennungskraftmaschinen können sogenannte SCR-Abgasnachbehandlungseinrichtungen verwendet werden. In einer SCR-Abgasnachbehandlungseinrichtung wird typischerweise eine Harnstoffwasserlösung in den Abgasstrom eingespritzt. Aus der Harnstoffwasserlösung kann durch eine Hydrolysereaktion Ammoniak und CO2 entstehen. Das Ammoniak kann in einem SCR-Katalysator der SCR-Abgasnachbehandlungseinrichtung mit den im Abgas vorhandenen Stickoxiden zur Reduktion der Stickoxide reagieren. Insbesondere können hierbei zweiatomiger Stickstoff und Wasser gebildet werden.

Die Harnstoffwasserlösung ist so zu dosieren, dass es zu keiner Ammoniak-Überdosierung kommt. Bei einer Ammoniak-Überdosierung kann es zu einem sogenannten Ammoniakschlupf kommen, wobei noch Ammoniak stromabwärts des SCR-Katalysators im Abgas mitgeführt wird.

Die US 2017/0306827 A1 offenbart ein System bestehend aus einem Abgassystem mit einem Katalysator zur selektiven katalytischen Reduktion (SCR) und einer Steuerung. Ein Ammoniak-zu-NOx-Verhältnis-Wert (ANR-Wert) für das durch das Abgassystem strömende Abgas wird ermittelt. Ein NH3-Schlupfwert, der auf einen NH3-Schlupf durch das Abgassystem hinter dem SCR-Katalysator hinweist, wird mittels eines NH3-Sensors stromabwärts des SCR-Katalysators ermittelt.

Die US 2005/0282285 A1 offenbart ein Verfahren zur Steuerung der Zuführrate von Ammoniak zu einem SCR-Katalysator, bestehend aus Einstellen einer Ammoniak-Zufuhrrate und Vorsehen eines diskreten Pulses in der Ammoniak-Zufuhrrate. Eine Ausgabe eines NOx-Sensors hinter dem SCR-Katalysator wird analysiert, um festzustellen, ob ein Ammoniakschlupf auftritt.

Die WO 2011/112985 A1 offenbart ein Verfahren, das den Betrieb eines SCR-Nachbehandlungssystems bei einer Reihe von Betriebspunkten mit reduziertem Ammoniak-zu-NOx-Verhältnis (ANR) vorsieht. Das Verfahren beinhaltet ferner die Bestimmung eines DeNOx-Wirkungsgrades, der jedem der ANR-Betriebspunkte entspricht. Das Verfahren umfasst ferner die Bestimmung eines Reduzierkorrekturwertes als Reaktion auf die DeNOx-Wirkungsgradwerte, die jedem der ANR-Betriebspunkte entsprechen, und die Bereitstellung eines Reduziereinspritzbefehls als Reaktion auf den Reduzierkorrekturwert.

Weitere verwandte Verfahren sind bspw. aus der WO 2016/018886 A1, der DE 11 2014 005 463 T5, der WO 2015/092225 A1, der WO 2015/095332 A1 und der EP 2 734 718 B1, der WO 2010/065963 A2, der US 2017/051654 A1, der DE 10 2016 209533 A1, der WO 2013/147653 A1 und der EP 3 139 013 A1 bekannt.

Der Erfindung liegt die Aufgabe zu Grunde, ein alternatives und/oder verbessertes Verfahren zum Überwachen einer SCR-Abgasnachbehandlungseinrichtung vorzusehen. Insbesondere soll auf einfache Weise eine Feststellung eines Ammoniakschlupfzustands ermöglicht werden. Insbesondere besteht eine Aufgabe darin, zu erkennen, ob ein von einem Stickoxidsensor, der eine Querempfindlichkeit zu Ammoniak aufweist, gemessener Wert auch Ammoniak-Anteile aufweist.

Die Aufgabe wird gelöst durch die Merkmale der unabhängigen Ansprüche. Vorteilhafte Weiterbildungen sind in den abhängigen Ansprüchen und der Beschreibung angegeben.

Das Verfahren dient zum Überwachen einer SCR-Abgasnachbehandlungseinrichtung. Das Verfahren weist ein Überwachen eines Reduktionsmittelmenge-Stickoxidumsatz-Verhältnisses, insbesondere eines Ammoniakmenge-Stickoxidumsatz-Verhältnisses (z. B. ANR-Wert = ammonia-to-NOx-ratio-Wert), der SCR-Abgasnachbehandlungseinrichtung auf. Der Stickoxidumsatz wird mit einer Querempfindlichkeit zu Ammoniak erfasst oder bestimmt. Das Verfahren weist ferner ein Feststellen eines Ammoniakschlupfzustands basierend auf dem überwachten Reduktionsmittelmenge-Stickoxidumsatz-Verhältnis auf.

Da der Stickoxidumsatz mit einer Querempfindlichkeit auf Ammoniak ermittelt wird, kann bei einem abnormalen, insbesondere bei einem zu großen, Reduktionsmittelmenge-Stickoxidumsatz-Verhältnis erkannt werden, dass Ammoniakschlupf auftritt. Das Verfahren ist einfach durchführbar und auf einfache Weise implementierbar, da es zweckmäßig lediglich die Parameter Reduktionsmittelmenge und Stickoxidumsatz zum Durchführen der Überwachung benötigt. Somit ist keine oder kaum zusätzliche Gerätetechnik zum Durchführen des Verfahrens notwendig. Aufgrund der Einfachheit des Verfahrens ist dieses auch vergleichsweise robust.

Tritt Ammoniakschlupf auf, wird der erfasste oder bestimmte Stickoxidumsatz, der als Divisor in das Reduktionsmittelmenge-Stickoxidumsatz-Verhältnis eingeht, aufgrund der Querempfindlichkeit zu Ammoniak insbesondere in kurzer Zeit kleiner bzw. relativ klein. Als Folge kann das Reduktionsmittelmenge-Stickoxidumsatz-Verhältnis insbesondere in kurzer Zeit relativ groß bzw. größer werden. Dieses abnormale Verhalten kann bei der Überwachung erkannt und als Ammoniakschlupf identifiziert werden.

Zusätzlich verhindert das vorliegende Verfahren, das bei Auftreten von Ammoniakschlupf in der Folge mehr Reduktionsmittel zudosiert wird, da der erfasste oder bestimmte Stickoxidumsatz aufgrund der Querempfindlichkeit zu Ammoniak fälschlicherweise einen zu geringen Stickoxidumsatz anzeigt, auf den normalerweise mit einer Erhöhung der Reduktionsmittelmenge reagiert werden würde.

Insbesondere kann das Feststellen eines Ammoniakschlupfzustands nur auf dem überwachten Reduktionsmittelmenge-Stickoxidumsatz-Verhältnis basieren. Es ist auch möglich, beispielsweise weitere Betriebsparameter der Brennkraftmaschine und/oder der SCR-Abgasnachbehandlungseinrichtung hinzuzuziehen, um beispielsweise auszuschließen, dass die Veränderung des überwachten Ammoniakmenge-Stickoxidumsatz-Verhältnisses sich auf veränderte Betriebsparameter zurückführen lässt (zum Beispiel erhöhte Abgasmenge, erhöhte Reduktionsmittelmenge usw.).

Zweckmäßig kann sich der hierin verwendete Begriff "Reduktionsmittel" bspw. auf ein Fluid (z. B. Harnstoffwasserlösung), das zum Reduzieren von Stickoxiden in Abgas einspritzbar ist, auf einen in dem Fluid befindlichen Bestandteil (z. B. Harnstoff) und/oder auf Ammoniak, das sich aus dem Fluid bspw. nach der Einspritzung bilden kann, beziehen.

Der Stickoxidumsatz wird als eine Differenz aus einem ersten Stickoxidwert des Abgases stromaufwärts eines SCR Katalysators und einem zweiten Stickoxidwert des Abgases stromabwärts des SCR-Katalysators ergibt, wobei der zweite Stickoxidwert mit einer Querempfindlichkeit zu Ammoniak erfasst ist.

Insbesondere können sich die Reduktionsmittelmenge und der Stickoxidumsatz auf einen gleichen Zeitraum beziehen, sodass mit dem überwachten Reduktionsmittelmenge-Stickoxidumsatz-Verhältnis erfasst werden kann, welche Reduktionsmittelmenge zu welchem Stickoxidumsatz geführt hat.

Wie hierin verwendet, kann sich die Abkürzung "SCR" z. B. in SCR-Katalysator und SCR-Abgasnachbehandlungseinrichtung auf eine "selektive katalytische Reduktion" beziehen (engl. scr - selctive catalytic reduction).

Es sollte erkannt werden, dass auch wenn hierin die Begriffe Stickoxid, Stickoxidwert, Stickoxidsensor, Stickoxidgehalt, Stickoxidanteil, Stickoxidumsatz usw. verwendet werden, diese sich aufgrund einer Querempfindlichkeit zu Ammoniak auf eine Kombination von Stickoxid und Ammoniak beziehen können, insbesondere wenn Ammoniakschlupf auftritt.

Zweckmäßig kann das Reduktionsmittelmenge-Stickoxidumsatz-Verhältnis permanent während des Betriebs der SCR-Abgasnachbehandlungseinrichtung überwacht werden.

In einem bevorzugten Ausführungsbeispiel wird ein Ammoniakschlupfzustand festgestellt, wenn das Reduktionsmittelmenge-Stickoxidumsatz-Verhältnis außerhalb eines, insbesondere vorbestimmten, zulässigen Bereichs ist. Alternativ oder zusätzlich wird ein Ammoniakschlupfzustand festgestellt, wenn das Reduktionsmittelmenge-Stickoxidumsatz-Verhältnis für eine vorbestimmte Zeitdauer außerhalb eines, insbesondere vorbestimmten, zulässigen Bereichs ist. Der zulässige Bereich und/oder die Zeitdauer können vorbestimmt und beispielsweise in einer Überwachungseinrichtung gespeichert sein. Die Berücksichtigung der Zeitdauer ermöglicht, dass temporäre Ausreißer und Messfehler nicht zu einer Fehlfeststellung eines Ammoniakschlupfzustands führen.

In einem weiteren bevorzugten Ausführungsbeispiel wird ein Ammoniakschlupfzustand festgestellt, wenn das Reduktionsmittelmenge-Stickoxidumsatz-Verhältnis größer als ein vorbestimmter Grenzwert ist. Alternativ oder zusätzlich wird ein Ammoniakschlupfzustand festgestellt, wenn das Reduktionsmittelmenge-Stickoxidumsatz-Verhältnis für eine vorbestimmte Zeitdauer größer als ein vorbestimmter Grenzwert ist. Der Grenzwert und/oder die Zeitdauer können vorbestimmt und beispielsweise in einer Überwachungseinrichtung gespeichert sein. Die Berücksichtigung der Zeitdauer ermöglicht, dass temporäre Ausreißer und Messfehler nicht zu einer Fehlfeststellung eines Ammoniakschlupfzustands führen.

Es ist auch möglich, dass der Stickoxidumsatz und/oder die zum Bestimmen des Stickoxidumsatzes verwendeten Stickoxidwerte als Mittelwerte mehrerer, insbesondere nacheinander durchgeführter, Messungen verwendet werden.

In einem weiteren Ausführungsbeispiel weist das Verfahren ein Bestimmen oder Schätzen einer Ammoniakschlupfmenge basierend auf dem überwachten Reduktionsmittelmenge-Stickoxidumsatz-Verhältnis auf. Beispielsweise kann die Ammoniakschlupfmenge umso größer bestimmt oder geschätzt werden, je größer das überwachte Reduktionsmittelmenge-Stickoxidumsatz-Verhältnis ist. Hierzu können beispielsweise empirisch ermittelte Daten in Form von Tabellen, Formeln usw. verwendet werden. Die Schätzung der Ammoniakschlupfmenge kann dazu verwendet werden, geeignete angepasste Gegenmaßnahmen einzuleiten.

Die Reduktionsmittelmenge, insbesondere die Ammoniakmenge, wird basierend auf einer Erfassung einer Zusammensetzung eines zu einem Reduktionsmittelinjektor zum Einspritzen zugeführten oder zuzuführenden Fluids, insbesondere einer Harnstoffwasserlösung, erfasst oder bestimmt.

In einer Weiterbildung wird ein Wasseranteil, ein Wassergehalt, ein Harnstoffanteil und/oder ein Harnstoffgehalt des Fluids erfasst. Beispielsweise kann auf Grundlage einer Erfassung eines Harnstoffanteils in dem Fluid ermittelt werden, wie viel Ammoniak sich damit bilden lässt. Es ist auch möglich, beispielsweise einen Wasseranteil zu erfassen und auf einen Harnstoffanteil zu schließen (Z. B. 1 - Wasseranteil).

In einer weiteren Ausführungsform erfolgt die Erfassung der Zusammensetzung in einem Fluidtank, insbesondere für eine Harnstoffwasserlösung.

In einer Ausführungsvariante wird die Reduktionsmittelmenge, insbesondere die Ammoniakmenge, basierend auf einer Erfassung einer zu einem Reduktionsmittelinjektor zum Einspritzen zugeführten oder eingespritzten Fluidmenge eines Fluids, insbesondere einer Harnstoffwasserlösung, erfasst oder bestimmt.

In einer Weiterbildung erfolgt die Erfassung der Fluidmenge mittels Erfassung eines Betriebsparameters einer Fluidpumpe (z. B. Harnstoffwasserlösung-Pumpe), mittels Erfassung eines Betriebsparameters eines Reduktionsmittelinjektors, mittels eines Durchflussmengensensors (z. B. Harnstoffwasserlösung-Durchflussmengensensor) und/oder mittels eines Füllstandsensors eines Fluidtanks (z. B. Harnstoffwasserlösung-Tank).

Beispielsweise kann der Fluidtank über die Fluidpumpe in Fluidverbindung mit dem Reduktionsmittelinjektor stehen. Es ist möglich, dass der Durchflussmengensensor irgendwo in oder an der Fluidverbindung zwischen der Fluidtank und dem Reduktionsmittelinjektor angeordnet ist.

Insbesondere kann die Reduktionsmittelmenge als Kombination einer Erfassung der Fluidmenge und einer Erfassung der Zusammensetzung des Fluids erfolgen.

In einer Ausführungsvariante wird die Reduktionsmittelmenge, insbesondere die Ammoniakmenge, basierend auf einer Pumpendrehzahl einer Fluidpumpe, einem Förderdruck der Fluidpumpe und/oder einer Öffnungszeit eines Reduktionsmittelinjektors bestimmt (z. B. berechnet).

In einem Ausführungsbeispiel weist das Verfahren ferner ein (z. B. physikalisches oder virtuelles) Erfassen eines ersten Stickoxidwerts (zum Beispiel Stickoxidgehalt, Stickoxidmenge usw. im Abgas) stromaufwärts eines SCR-Katalysators der SCR-Abgasnachbehandlungseinrichtung auf. Alternativ oder zusätzlich weist das Verfahren ferner ein (z. B. physikalisches) Erfassen eines zweiten Stickoxidwerts (zum Beispiel Stickoxidgehalt, Stickoxidmenge usw. im Abgas) stromabwärts eines SCR-Katalysators, der mit einer Querempfindlichkeit zu Ammoniak erfasst wird, auf. Alternativ oder zusätzlich weist das Verfahren ein Bestimmen des Stickoxidumsatzes als Differenz aus dem ersten Stickoxidwert und dem zweiten Stickoxidwert auf.

In einem weiteren Ausführungsbeispiel weist das Verfahren ein Einleiten von Maßnahmen zum Verringern eines Ammoniakschlupfes, wenn der Ammoniakschlupfzustand festgestellt wurde, auf. Alternativ oder zusätzlich kann beispielsweise eine eingespritzte oder einzuspritzende Reduktionsmittelmenge, wenn der Ammoniakschlupfzustand festgestellt wurde, verringert werden.

Die Erfindung ist auch auf eine Vorrichtung zur Abgasnachbehandlung, insbesondere eine SCR-Abgasnachbehandlungseinrichtung, gerichtet. Die Vorrichtung weist einen Reduktionsmittelinjektor und einen SCR-Katalysator, der stromabwärts von dem Reduktionsmittelinjektor angeordnet ist, auf. Die Vorrichtung weist eine Überwachungseinrichtung, die zum Ausführen eines Verfahrens wie hierin offenbart eingerichtet ist, auf. Die Vorrichtung bietet die gleichen Vorteile wie das hierin offenbarte Verfahren.

In einem Ausführungsbeispiel weist die Vorrichtung einen ersten Stickoxidsensor (z. B. physikalischer Stickoxidsensor oder virtueller Stickoxidsensor), der stromaufwärts von dem SCR-Katalysator (und/oder dem Reduktionsmittelinjektor) angeordnet ist und einen ersten Stickoxidwert erfasst, auf. Alternativ oder zusätzlich weist die Vorrichtung einen zweiten Stickoxidsensor (z. B. physikalischer Stickoxidsensor), der stromabwärts von dem SCR-Katalysator angeordnet ist und einen zweiten Stickoxidwert, insbesondere mit einer Querempfindlichkeit zu Ammoniak, erfasst, auf. Es ist möglich, dass die Überwachungseinrichtung den Stickoxidumsatz als Differenz aus dem ersten Stickoxidwert und dem zweiten Stickoxidwert bestimmt.

In einem weiteren Ausführungsbeispiel weist die Vorrichtung einen ersten Fluidsensor zur Erfassung einer Zusammensetzung eines zu dem Reduktionsmittelinjektor zum Einspritzen zuzuführenden oder zugeführten Fluids auf. Alternativ oder zusätzlich weist die Vorrichtung einen (zweiten) Fluidsensor (z. B. Fluidtank-Füllstandsensor, Fluid-Durchflussmengensensor) und/oder eine Fluidpumpe zur Erfassung einer Fluidmenge eines zu dem Reduktionsmittelinjektor zum Einspritzen zuzuführenden oder zugeführten Fluids auf. Es ist möglich, dass die Überwachungseinrichtung die Reduktionsmittelmenge, insbesondere die Ammoniakmenge, basierend auf der erfassten Zusammensetzung und der erfassten Fluidmenge bestimmt. Es ist auch möglich, dass die Überwachungseinrichtung die Reduktionsmittelmenge, insbesondere die Ammoniakmenge, basierend auf einer vorbestimmten Zusammensetzung des Fluids und der erfassten Fluidmenge bestimmt.

Zweckmäßig kann die Überwachungseinrichtung in Kommunikationsverbindung mit dem ersten Stickoxidsensor, dem zweiten Stickoxidsensor, dem ersten Fluidsensor, dem zweiten Fluidsensor, der Fluidpumpe und/oder dem Reduktionsmittelinjektor stehen.

Die Erfindung ist auch auf ein Kraftfahrzeug, insbesondere ein Nutzfahrzeug (zum Beispiel Lastkraftwagen oder Omnibus), mit einer Vorrichtung wie hierin offenbart gerichtet.

Es ist auch möglich, die Vorrichtung und das Verfahren wie hierin offenbart für Personenkraftwagen, Großmotoren, geländegängige Fahrzeuge, stationäre Motoren, Marinemotoren, in Feuerungsanlagen, Müllverbrennungsanlagen, Gasturbinen, Industrieanlagen usw. zu verwenden.

Zweckmäßig können sich hierin die Begriffe stromaufwärts und stromabwärts auf eine Richtung eines Abgasstroms in einem Abgasstrang beziehen. Ist beispielsweise eine Komponente A stromaufwärts von einer Komponente B angeordnet, so kann das Abgas zunächst die Komponente A und erst danach die Komponente B erreichen.

Zweckmäßig kann sich der Begriff Ammoniakschlupf auf eine Situation beziehen, in der Ammoniak im Abgas stromabwärts eines SCR-Katalysators vorhanden ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung eines Abgasnachbehandlungssystems mit einer SCR-Abgasnachbehandlungseinrichtung; und
- Figur 2: ein Flussdiagramm eines Verfahrens zum Überwachen einer SCR-Abgasnachbehandlungseinrichtung gemäß der vorliegenden Offenbarung.

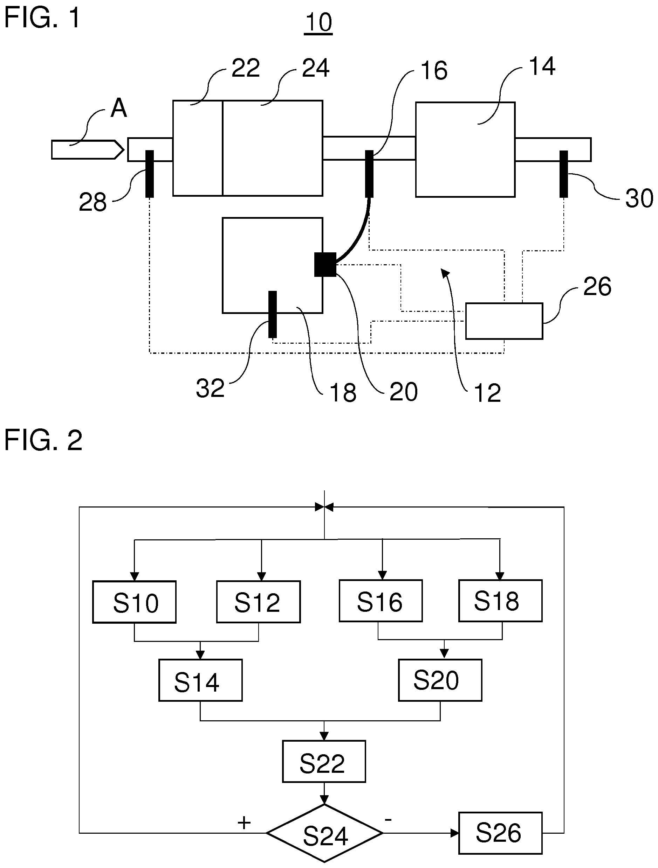

In Figur 1 ist ein Abgasnachbehandlungssystem 10 gezeigt. Das Abgasnachbehandlungssystem 10 dient zum Behandeln von Abgas einer Brennkraftmaschine. Dazu wird das Abgasnachbehandlungssystem 10 von Abgas (Pfeil A) durchströmt. Das Abgasnachbehandlungssystem 10 kann in einem Kraftfahrzeug, insbesondere einem Nutzfahrzeug, umfasst sein. Das Nutzfahrzeug kann beispielsweise ein Lastkraftwagen oder ein Omnibus sein. Das Abgasnachbehandlungssystem 10 kann insbesondere stromabwärts einer Brennkraftmaschine des Kraftfahrzeugs angeordnet sein.

Das Abgasnachbehandlungssystem 10 weist eine SCR-Abgasnachbehandlungseinrichtung 12 auf. Die SCR-Abgasnachbehandlungseinrichtung 12 dient zum Reduzieren von Stickoxiden (NOx) im Abgas. Die SCR-Abgasnachbehandlungseinrichtung 12 weist einen SCR-Katalysator 14 und einen Reduktionsmittelinjektor (Fluidinjektor) 16 auf. Der Reduktionsmittelinjektor 16 steht in Fluidverbindung mit einem Fluidtank 18. Der Fluidtank 18 ist mit einem Fluid, beispielsweise mit einer Harnstoffwasserlösung, gefüllt. Eine Fluidpumpe 20 kann das Fluid aus dem Fluidtank 18 zu dem Reduktionsmittelinjektor 16 fördern. Der Reduktionsmittelinjektor 16 kann das Fluid in einen Abgasrohrbereich stromaufwärts des SCR-Katalysators 14 einspritzen bzw. dosieren. Im heißen Abgasstrom kann sich aus der eingespritzten Harnstoffwasserlösung Ammoniak bilden, das zum Reduzieren der Stickoxide im Bereich des SCR-Katalysators 14 durch selektive katalytische Reduktion genutzt wird. Es ist auch möglich, dass zusätzliche Hydrolysekatalysatoren verwendet werden.

Das Abgasnachbehandlungssystem 10 kann weitere Abgasnachbehandlungseinrichtungen aufweisen. Zum Beispiel kann das Abgasnachbehandlungssystem 10 einen Oxidationskatalysator (zum Beispiel Dieseloxidationskatalysator) 22 und einen Partikelfilter (zum Beispiel Dieselpartikelfilter) 24 aufweisen. Der Oxidationskatalysator 22 und der Partikelfilter 24 können beispielsweise stromaufwärts von dem SCR-Katalysator 14 und/oder dem Reduktionsmittelinjektor 16 angeordnet sein. Es ist auch möglich, dass das Abgasnachbehandlungssystem 10 beispielsweise einen Ammoniak-Oxidationskatalysator (nicht dargestellt) stromabwärts des SCR-Katalysators 14 aufweist. Im Falle eines Ammoniakschlupfes kann der Ammoniak-Oxidationskatalysator zu viel dosiertes Ammoniak in Stickstoff und Wasser umwandeln. Der Ammoniak-Oxidationskatalysator kann auch wieder NOx generieren, das dann mittels eines Stickoxidsensors (z. B. Stickoxidsensor 30) erfasst werden kann. Die Funktion des Ammoniak-Oxidationskatalysators kann betriebspunktabhängig (z. B. Temperatur, Abgasmassenstrom) sein. Es ist möglich, dass der Ammoniak-Oxidationskatalysator bei zu großem Ammoniakschlupf nicht in der Lage ist, die gesamte Ammoniakmenge in Stickstoff und Wasser umzuwandeln.

Ferner ist eine Überwachungseinrichtung 26 zum Überwachen der SCR-Abgasnachbehandlungseinrichtung 12 vorgesehen. Die Überwachungseinrichtung 26 kann beispielsweise als eine separate Überwachungseinrichtung vorgesehen oder in eine Steuerung der SCR-Abgasnachbehandlungseinrichtung 12 integriert sein. Die Überwachungseinrichtung 26 kann mit verschiedenen Sensoren in Kommunikationsverbindung stehen, sodass insbesondere ermöglicht wird, dass die Überwachungseinrichtung 26 ein Reduktionsmittelmenge-Stickoxidumsatz-Verhältnis bestimmen kann.

Beispielsweise kann die Überwachungseinrichtung 26 mit einem ersten Stickoxidsensor 28 kommunikativ verbunden sein. Der erste Stickoxidsensor 28 kann stromaufwärts von dem Reduktionsmittelinjektor 16 und dem SCR-Katalysator 14 angeordnet sein. Beispielsweise kann der erste Stickoxidsensor 28 auch stromaufwärts von dem Oxidationskatalysator 22 und dem Partikelfilter 24 angeordnet sein. Der erste Stickoxidsensor 28 kann einen ersten Stickoxidwert, zum Beispiel ein Stickoxidgehalt oder ein Stickoxidanteil, im vorbeiströmenden Abgas stromaufwärts des Reduktionsmittelinjektors 16 und des SCR-Katalysators 14 messen. Der erste Stickoxidsensor 28 kann ein entsprechendes Signal zu der Überwachungseinrichtung 26 ausgeben. Es ist möglich, dass der erste Stickoxidsensor 28 querempfindlich auf Ammoniak ist. Es ist auch möglich, dass der erste Stickoxidsensor 28 ein physikalischer Sensor oder ein virtueller Sensor ist. Als virtueller Sensor kann bspw. ein Modell vorgesehen sein, das die Stickoxidemissionen basierend auf erfassten oder bekannten Betriebsparametern z. B. der Brennkraftmaschine berechnet.

Ferner kann die Überwachungseinrichtung 26 mit einem zweiten Stickoxidsensor 30 kommunikativ verbunden sein. Der zweite Stickoxidsensor 30 kann stromabwärts von dem SCR-Katalysator 14 angeordnet sein. Wie der erste Stickoxidsensor 28 kann der zweite Stickoxidsensor 30 dazu ausgebildet sein, einen zweiten Stickoxidwert, zum Beispiel ein Stickoxidgehalt oder ein Stickoxidanteil im vorbeiströmenden Abgas stromabwärts des SCR-Katalysators 14 zu messen. Der zweite Stickoxidsensor 30 kann eine Querempfindlichkeit zu Ammoniak aufweisen. Beispielsweise kann der zweite Stickoxidsensor 30 derart querempfindlich auf Ammoniak sein, dass pro gemessenem NOx-Molekül 3/3 - 4/3 NH3-Moleküle (Ammoniakmoleküle) messbar sind, insbesondere in Abhängigkeit vom Verhältnis von NO und NO2. Dies kann zur Folge haben, dass der von dem zweiten Stickoxidsensor 30 gemessene Stickoxidwert tatsächlich ein kombinierter Wert aus gemessenem Stickoxid und Ammoniak ist, wenn Ammoniakschlupf auftritt. Zweckmäßig kann der zweite Stickoxidsensor 30 ein physikalischer Sensor sein.

Die Überwachungseinrichtung 26 kann ferner zum Erfassen bzw. Bestimmen einer von dem Reduktionsmittelinjektor 16 eingespritzten Reduktionsmittelmenge ausgebildet sein. Hierzu kann die Überwachungseinrichtung 26 beispielsweise in Kommunikationsverbindung mit der Fluidpumpe 20 stehen. Die Fluidpumpe 20 kann zweckmäßig einen Betriebsparameter (z. B. eine aufgenommene elektrische Leistung) an die Überwachungseinrichtung 26 senden, die auf eine Fördermenge eines Fluids zu dem Reduktionsmittelinjektor 16 hinweist. Es ist auch möglich, möglicherweise auftretende Leckageströme zu berücksichtigen. Es kann auch ein separater Fluidsensor vorgesehen sein, der die Fördermenge direkt oder indirekt erfasst. Zum Beispiel kann ein Durchflussmengensensor in einer Fluidverbindung zwischen der Fluidpumpe 20 und dem Reduktionsmittelinjektor 16 vorgesehen sein. Alternativ oder zusätzlich kann die Überwachungseinrichtung 26 die Fördermenge beispielsweise mittels eines Füllstandsensors (nicht dargestellt), der einen Füllstand des Fluidtanks 18 erfasst, erfassen. Zusätzlich kann die Überwachungseinrichtung 26 mit einem weiteren Fluidsensor 32 verbunden sein. Der weitere Fluidsensor 32 kann eine Qualität des Fluids in dem Fluidtank 18 erfassen und als entsprechendes Signal ausgeben. Zum Beispiel kann der weitere Fluidsensor 32 einen Harnstoffanteil, einen Harnstoffgehalt, einen Wasseranteil und/oder ein Wassergehalt einer Harnstoffwasserlösung im Fluidtank 18 erfassen. Es ist auch möglich, dass kein weiterer Fluidsensor 32 notwendig ist, da nur eine genormte Harnstofflösung mit beispielsweise 32,5 % reinem Harnstoff in demineralisiertem Wasser verwendet wird.

Nachfolgend ist unter Bezugnahme auf Figur 2 ein beispielhaftes Verfahren zum Überwachen einer SCR-Abgasnachbehandlungseinrichtung unter Bezugnahme auf die beispielhaften Komponenten der SCR-Abgasnachbehandlungseinrichtung 12 von Figur 1 beschrieben. Das Verfahren kann zumindest teilweise insbesondere von der Überwachungseinrichtung 26 durchgeführt werden.

In einem Schritt S10 wird ein erster Stickoxidwert stromaufwärts von dem SCR-Katalysator 14 erfasst. Zum Beispiel kann der erste Stickoxidwert von dem ersten Stickoxidsensor 28 erfasst werden. In einem Schritt S12 wird ein zweiter Stickoxidwert stromabwärts von dem SCR-Katalysator 14 zum Beispiel mittels des zweiten Stickoxidsensors 30 erfasst. Der erste und der zweite Stickoxidwert können in einem zeitlichen Bezug zueinander, zum Beispiel gleichzeitig oder innerhalb eines vorbestimmten Zeitfensters usw., erfasst werden. Es ist auch möglich, dass der erste Stickoxidwert und der zweite Stickoxidwert jeweils über mehrere Einzelmessungen gemittelte Stickoxidwerte sind. In einem Schritt S14 kann ein Stickoxidumsatz des SCR-Katalysators 14 als Differenz zwischen dem im Schritt S10 erfassten ersten Stickoxidwert und dem im Schritt S12 erfassten zweiten Stickoxidwert beispielsweise von der Überwachungseinrichtung 26 berechnet werden. Für einen gegebenen ersten Stickoxidwert gilt, je kleiner der zweite Stickoxidwert ist, desto größer ist der berechnete Stickoxidumsatz.

In einem Schritt S16 kann eine von dem Reduktionsmittelinjektor 16 eingespritzte Fluidmenge beispielsweise als eine erfasste Fördermenge der Fluidpumpe 20 erfasst werden. In einem Schritt S18 kann erfasst werden, wie sich das von dem Reduktionsmittelinjektor 16 eingespritzte Fluid zusammensetzt. Insbesondere kann von dem Fluidsensor 32 direkt oder indirekt erfasst werden, wie groß ein Anteil von Harnstoff in dem Fluid im Fluidtank 18 ist. Basierend auf der im Schritt S16 erfassten Fluidmenge und der im Schritt S18 erfassten Fluidzusammensetzung kann in einem Schritt S20 eine von dem Reduktionsmittelinjektor 16 eingespritzte Reduktionsmittelmenge bestimmt werden. Insbesondere kann im Schritt S20 bestimmt werden, wie viel Ammoniak (NH3) durch die eingespritzte Menge der Harnstoffwasserlösung im Abgasstrang gebildet wird. Wie bereits erwähnt, besteht auch die Möglichkeit, dass die Zusammensetzung des Fluids nicht gesondert erfasst wird, sondern auf einen vorbestimmten oder geschätzten Wert zurückgegriffen wird, zum Beispiel 32,5 % reiner Harnstoff in der Harnstoffwasserlösung in dem Fluidtank 18. Der Schritt S20 kann beispielsweise von der Überwachungseinrichtung 26 durchgeführt werden.

Zweckmäßig weisen die Reduktionsmittelmenge und der Stickoxidumsatz einen zeitlichen Bezug zueinander auf, das heißt, beziehen sich beispielsweise auf einen gleichen Zeitraum der Überwachung.

In einem Schritt S22 kann ein Reduktionsmittelmenge-Stickoxidumsatz-Verhältnis aus dem im Schritt S14 bestimmten Stickoxidumsatz und der im Schritt S20 bestimmten Reduktionsmittelmenge bestimmt werden. Beispielsweise kann das Reduktionsmittelmenge-Stickoxidumsatz-Verhältnis als Quotient einer Ammoniakmenge und eines Stickoxidumsatzes (=ANR, engl. ammonia to NOx ratio) berechnet werden.

Im Schritt S24 kann geprüft werden, ob das bestimmte Reduktionsmittelmenge-Stickoxidumsatz-Verhältnis aus Schritt S22 außerhalb eines vorbestimmten zulässigen Toleranzbereichs liegt. Insbesondere kann im Schritt S24 geprüft werden, ob das bestimmte Reduktionsmittelmenge-Stickoxidumsatz-Verhältnis aus Schritt S22 größer als ein vorbestimmter Grenzwert ist. Bspw. kann geprüft werden, ob der Grenzwert für eine vorbestimmte Zeitdauer überschritten wurde. Der Hintergrund des Schritts S24 liegt darin, dass sich der bestimmte Stickoxidumsatz verringert, wenn sich ein Ammoniakschlupf erhöht. Der Grund hierfür ist, dass der auf Ammoniak querempfindliche zweite Stickoxidsensor 30 einen größeren zweiten Stickoxidwert ausgibt, wenn Ammoniakschlupf auftritt. Wenn der Stickoxidumsatz sich verkleinert, wird der Quotient aus der Reduktionsmittelmenge und dem Stickoxidumsatz größer. Der zulässige Toleranzbereich bzw. Grenzwert ist so gewählt, dass bei dessen Überschreiten davon ausgegangen werden kann, dass Ammoniakschlupf in einem Maß vorliegt, auf das zu reagieren ist.

Wenn das bestimmte Reduktionsmittelmenge-Stickoxidumsatz-Verhältnis gemäß Schritt S24 innerhalb des vorbestimmten zulässigen Toleranzbereichs liegt ( + ), kann die Überwachung mit den Schritten S10, S12, S16 und S18 fortgesetzt werden. Ist hingegen das bestimmte Reduktionsmittelmenge-Stickoxidumsatz-Verhältnis gemäß Schritt S24 außerhalb des vorbestimmten zulässigen Toleranzbereichs ( - ), so wird festgestellt, dass ein Ammoniakschlupfzustand vorliegt. Im Schritt S26 können in Reaktion darauf weitere Maßnahmen eingeleitet werden.

Beispielsweise können im Schritt S26 Maßnahmen zur Verringerung des Ammoniakschlupfes eingeleitet werden. Insbesondere kann eine von dem Reduktionsmittelinjektor 16 eingespritzte Fluidmenge verringert werden. Es ist möglich, dass basierend auf dem bestimmten Reduktionsmittelmenge-Stickoxidumsatz-Verhältnis eine Abschätzung hinsichtlich des Ausmaßes des aufgetretenen Ammoniakschlupfes getroffen wird. Basierend auf der Abschätzung kann beispielsweise die Gegenmaßnahme zum Verringern des Ammoniakschlupfes entsprechend eingestellt werden. Nach dem Einleiten von Maßnahmen im Schritt S26 kann das Verfahren beispielsweise mit den Schritten S10, S12, S16 und S20 fortgesetzt werden.

Die Erfindung ist nicht auf die vorstehend beschriebenen bevorzugten Ausführungsbeispiele beschränkt.

### Bezugszeichenliste

- A: Abgas
- 10: Abgasnachbehandlungssystem
- 12: SCR-Abgasnachbehandlungseinrichtung
- 14: SCR-Katalysator
- 16: Reduktionsmittelinjektor
- 18: Fluidtank
- 20: Fluidpumpe
- 22: Oxidationskatalysator
- 24: Partikelfilter
- 26: Überwachungseinrichtung
- 28: Erster Stickoxidsensor
- 30: Zweiter Stickoxidsensor
- 32: Fluidsensor

## Patentansprüche

1. Verfahren zum Überwachen einer SCR-Abgasnachbehandlungseinrichtung (12), aufweisend:
Erfassen eines ersten Stickoxidwerts im Abgas stromaufwärts eines Reduktionsmittelinjektors (16) und eines SCR-Katalysators (14) der SCR-Abgasnachbehandlungseinrichtung (12);
Erfassen eines zweiten Stickoxidwerts im Abgas stromabwärts des SCR-Katalysators (14), wobei der zweite Stickoxidwert mit einer Querempfindlichkeit zu Ammoniak erfasst wird;
Bestimmen eines Stickoxidumsatzes als Differenz aus dem ersten Stickoxidwert und dem zweiten Stickoxidwert;
Überwachen eines Reduktionsmittelmenge-Stickoxidumsatz-Verhältnisses, insbesondere eines Ammoniakmenge-Stickoxidumsatz-Verhältnisses, der SCR-Abgasnachbehandlungseinrichtung (12), wobei die Reduktionsmittelmenge, insbesondere die Ammoniakmenge, basierend auf einer Erfassung einer zu dem Reduktionsmittelinjektor (16) zum Einspritzen zugeführten oder eingespritzten Fluidmenge eines Fluids, insbesondere einer Harnstoffwasserlösung, erfasst oder bestimmt wird, und
Feststellen eines Ammoniakschlupfzustands basierend auf dem überwachten Reduktionsmittelmenge-Stickoxidumsatz-Verhältnis.

2. Verfahren nach Anspruch 1, wobei:
ein Ammoniakschlupfzustand festgestellt wird, wenn das Reduktionsmittelmenge-Stickoxidumsatz-Verhältnis außerhalb eines, insbesondere vorbestimmten, zulässigen Bereichs ist; und/oder
ein Ammoniakschlupfzustand festgestellt wird, wenn das Reduktionsmittelmenge-Stickoxidumsatz-Verhältnis für eine vorbestimmte Zeitdauer außerhalb eines, insbesondere vorbestimmten, zulässigen Bereichs ist.

3. Verfahren nach Anspruch 1 oder Anspruch 2, wobei:
ein Ammoniakschlupfzustand festgestellt wird, wenn das Reduktionsmittelmenge-Stickoxidumsatz-Verhältnis größer als ein vorbestimmter Grenzwert ist; und/oder
ein Ammoniakschlupfzustand festgestellt wird, wenn das Reduktionsmittelmenge-Stickoxidumsatz-Verhältnis für eine vorbestimmte Zeitdauer größer als ein vorbestimmter Grenzwert ist.

4. Verfahren nach einem der vorherigen Ansprüche, ferner aufweisend:
Bestimmen oder Schätzen einer Ammoniakschlupfmenge basierend auf dem überwachten Reduktionsmittelmenge-Stickoxidumsatz-Verhältnis.

5. Verfahren nach einem der vorherigen Ansprüche, wobei:
die Reduktionsmittelmenge, insbesondere die Ammoniakmenge, basierend auf einer Erfassung einer Zusammensetzung eines zu einem Reduktionsmittelinjektor (16) zum Einspritzen zugeführten oder zuzuführenden Fluids, insbesondere einer Harnstoffwasserlösung, erfasst oder bestimmt wird.

6. Verfahren nach Anspruch 5, wobei:
ein Wasseranteil, ein Wassergehalt, ein Harnstoffanteil und/oder ein Harnstoffgehalt des Fluids erfasst wird; und/oder
die Erfassung der Zusammensetzung in einem Fluidtank (18), insbesondere für eine Harnstoffwasserlösung, erfolgt.

7. Verfahren nacheinem der vorherigen Ansprüche, wobei
die Erfassung der Fluidmenge mittels Erfassung eines Betriebsparameters einer Fluidpumpe (20), mittels Erfassung eines Betriebsparameters eines Reduktionsmittelinjektors, mittels eines Durchflussmengensensors und/oder mittels eines Füllstandsensors eines Fluidtanks (18) erfolgt.

8. Verfahren nach einem der vorherigen Ansprüche, wobei:
die Reduktionsmittelmenge, insbesondere die Ammoniakmenge, basierend auf einer Pumpendrehzahl einer Fluidpumpe, einem Förderdruck der Fluidpumpe und einer Öffnungszeit eines Reduktionsmittelinjektors bestimmt wird.

9. Verfahren nach einem der vorherigen Ansprüche, ferner aufweisend:
Einleiten von Maßnahmen zum Verringern eines Ammoniakschlupfes, wenn der Ammoniakschlupfzustand festgestellt wurde; und/oder
Verringern einer eingespritzten oder einzuspritzenden Reduktionsmittelmenge, wenn der Ammoniakschlupfzustand festgestellt wurde.

10. Vorrichtung zur Abgasnachbehandlung, insbesondere SCR-Abgasnachbehandlungseinrichtung (12), aufweisend:
einen Reduktionsmittelinjektor (16);
einen SCR-Katalysator (14), der stromabwärts von dem Reduktionsmittelinjektor (16) angeordnet ist; und
eine Überwachungseinrichtung (26), die zum Ausführen eines Verfahrens nach einem der vorherigen Ansprüche eingerichtet ist.

11. Vorrichtung nach Anspruch 10, ferner aufweisend:
einen ersten Stickoxidsensor (28), der stromaufwärts von dem SCR-Katalysator (14) angeordnet ist und einen ersten Stickoxidwert erfasst; und
einen zweiten Stickoxidsensor (30), der stromabwärts von dem SCR-Katalysator (14) angeordnet ist und einen zweiten Stickoxidwert, insbesondere mit einer Querempfindlichkeit zu Ammoniak, erfasst,
wobei die Überwachungseinrichtung (26) den Stickoxidumsatz als Differenz aus dem ersten Stickoxidwert und dem zweiten Stickoxidwert bestimmt.

12. Vorrichtung nach Anspruch 10 oder 11, ferner aufweisend:
einen ersten Fluidsensor (32) zur Erfassung einer Zusammensetzung eines zu dem Reduktionsmittelinjektor (16) zum Einspritzen zuzuführenden oder zugeführten Fluids; und
einen zweiten Fluidsensor und/oder eine Fluidpumpe (20) zur Erfassung einer Fluidmenge eines zu dem Reduktionsmittelinjektor (16) zum Einspritzen zuzuführenden oder zugeführten Fluids;
wobei die Überwachungseinrichtung (26) die Reduktionsmittelmenge, insbesondere die Ammoniakmenge, basierend auf der erfassten Zusammensetzung und der erfassten Fluidmenge bestimmt.

13. Kraftfahrzeug, insbesondere Nutzfahrzeug, mit einer Vorrichtung nach einem der Ansprüche 10 bis 12.

## Claims

1. A method for monitoring an SCR exhaust-gas aftertreatment device (12), involving:
detecting a first nitrogen oxide value in the exhaust gas upstream of a reducing agent injector (16) and an SCR catalytic converter (14) of the SCR exhaust-gas aftertreatment device (12);
detecting a second nitrogen oxide value in the exhaust gas downstream of the SCR catalytic converter (14), wherein the second nitrogen oxide value is detected with a cross-sensitivity to ammonia;
determining the nitrogen oxide conversion as the difference between the first nitrogen oxide value and the second nitrogen oxide value;
monitoring a ratio between reducing agent quantity and nitrogen oxide conversion, in particular a ratio between ammonia quantity and nitrogen oxide conversion, of the SCR exhaust-gas aftertreatment device (12), wherein the reducing agent quantity, in particular the ammonia quantity, is detected or determined based on a detection of a fluid quantity supplied to the reducing agent injector (16) for injection, or of an injected fluid quantity, of a fluid, in particular of an aqueous urea solution, and
determining an ammonia slip condition based on the monitored ratio between reducing agent quantity and nitrogen oxide conversion.

2. The method according to Claim 1, wherein:
an ammonia slip condition is determined if the ratio between reducing agent quantity and nitrogen oxide conversion is outside a permissible range, in particular a predetermined permissible range; and/or
an ammonia slip condition is determined if the ratio between reducing agent quantity and nitrogen oxide conversion is outside a permissible range, in particular a predetermined permissible range, for a predetermined period of time.

3. The method according to Claim 1 or Claim 2, wherein:
an ammonia slip condition is determined if the ratio between reducing agent quantity and nitrogen oxide conversion is greater than a predetermined limit value; and/or
an ammonia slip condition is determined if the ratio between reducing agent quantity and nitrogen oxide conversion is greater than a predetermined limit value for a predetermined period of time.

4. The method according to one of the preceding claims, furthermore involving:
determining or estimating an ammonia slip quantity based on the monitored ratio between reducing agent quantity and nitrogen oxide conversion.

5. The method according to one of the preceding claims, wherein:
the reducing agent quantity, in particular the ammonia quantity, is detected or determined based on a detection of a composition of a fluid supplied or being supplied to a reducing agent injector (16) for injection, in particular of an aqueous urea solution.

6. The method according to Claim 5, wherein:
a water fraction, a water content, a urea fraction and/or a urea content of the fluid are/is detected; and/or
the detection of the composition occurs in a fluid tank (18), in particular for an aqueous urea solution.

7. The method according to one of the preceding claims, wherein
the detection of the fluid quantity is performed by detection of an operating parameter of a fluid pump (20), by detection of an operating parameter of a reducing agent injector, by means of a flow rate sensor and/or by means of a fill level sensor of a fluid tank (18).

8. The method according to one of the preceding claims, wherein:
the reducing agent quantity, in particular the ammonia quantity, is determined based on a pump rotational speed of a fluid pump, a delivery pressure of the fluid pump and an opening time of a reducing agent injector.

9. The method according to one of the preceding claims, furthermore involving:
initiating measures to lessen ammonia slip if the ammonia slip condition has been determined; and/or
decreasing an injected reducing agent quantity or a reducing agent quantity to be injected if the ammonia slip condition has been determined.

10. A device for exhaust-gas aftertreatment, in particular an SCR exhaust-gas aftertreatment device (12), comprising:
a reducing agent injector (16);
an SCR catalytic converter (14), which is arranged downstream of the reducing agent injector (16); and
a monitoring device (26), which is designed to carry out the method according to one of the preceding claims.

11. The device according to Claim 10, furthermore comprising:
a first nitrogen oxide sensor (28) which is arranged upstream of the SCR catalytic converter (14) and which detects a first nitrogen oxide value; and
a second nitrogen oxide sensor (30) which is arranged downstream of the SCR catalytic converter (14) and which detects a second nitrogen oxide value, in particular with a cross-sensitivity to ammonia,
wherein the monitoring device (26) determines the nitrogen oxide conversion as the difference between the first nitrogen oxide value and the second nitrogen oxide value.

12. The device according to Claim 10 or 11, furthermore comprising:
a first fluid sensor (32) for detecting a composition of a fluid supplied or to be supplied to the reducing agent injector (16) for injection; and
a second fluid sensor and/or a fluid pump (20) for detecting a fluid quantity of a fluid supplied or to be supplied to the reducing agent injector (16) for injection;
wherein the monitoring device (26) determines the reducing agent quantity, in particular the ammonia quantity, based on the detected composition and the detected fluid quantity.

13. A motor vehicle, in particular a utility vehicle, having a device according to one of Claims 10 to 12.

## Revendications

1. Procédé de surveillance d'un système de post-traitement de gaz d'échappement SCR (12), le procédé comprenant les étapes suivantes :
détecter une première valeur d'oxyde d'azote dans les gaz d'échappement en amont d'un injecteur d'agent réducteur (16) et d'un convertisseur catalytique SCR (14) du système de post-traitement de gaz d'échappement SCR (12) ;
détecter une deuxième valeur d'oxyde d'azote dans les gaz d'échappement en aval du convertisseur catalytique SCR (14), la deuxième valeur d'oxyde d'azote étant détectée avec une sensibilité croisée à l'ammoniac ;
déterminer une conversion d'oxyde d'azote comme différence entre la première valeur d'oxyde d'azote et la deuxième valeur d'oxyde d'azote ;
surveiller un rapport quantité d'agent réducteur/ conversion d'oxyde d'azote, en particulier un rapport quantité d'ammoniac/conversion d'oxyde d'azote, du système de post-traitement de gaz d'échappement SCR (12), la quantité d'agent réducteur, notamment la quantité d'ammoniac, étant détectée ou déterminée sur la base d'une détection d'une quantité de fluide, en particulier d'une solution aqueuse d'urée, qui est amenée à l'injecteur d'agent réducteur (16), ou injectée dans celui-ci, en vue de l'injection, et
définir un état de fuite d'ammoniac sur la base du rapport quantité d'agent réducteur/conversion d'oxyde d'azote surveillé.

2. Procédé selon la revendication 1 :
un état de fuite d'ammoniac étant défini lorsque le rapport de conversion quantité d'agent réducteur/oxyde d'azote est à l'extérieur d'une zone admissible, en particulier prédéterminée ; et/ou
un état de fuite d'ammoniac étant défini lorsque le rapport quantité d'agent réducteur/conversion d'oxyde d'azote est à l'extérieur d'une zone admissible, en particulier prédéterminée, pendant un intervalle de temps prédéterminé.

3. Procédé selon la revendication 1 ou la revendication 2 :
un état de fuite d'ammoniac étant défini lorsque le rapport quantité d'agent réducteur/conversion d'oxyde d'azote est supérieur à une valeur limite prédéterminée ; et/ou
un état de fuite d'ammoniac étant défini lorsque le rapport quantité d'agent réducteur/conversion d'oxyde d'azote est supérieur à une valeur limite prédéterminée pendant un intervalle de temps prédéterminé.

4. Procédé selon l'une des revendications précédentes, comprenant en outre l'étape suivante :
déterminer ou estimer une quantité de fuite d'ammoniac sur la base du rapport quantité d'agent réducteur/conversion d'oxyde d'azote surveillé.

5. Procédé selon l'une des revendications précédentes :
la quantité d'agent réducteur, en particulier la quantité d'ammoniac, étant détectée ou déterminée sur la base d'une détection d'une composition d'un fluide, notamment d'une solution aqueuse d'urée, amené ou à amener à un injecteur d'agent réducteur (16) en vue de l'injection.

6. Procédé selon la revendication 5 :
une proportion d'eau, une teneur en eau, une proportion d'urée et/ou une teneur en urée du fluide étant détectée ; et/ou
la détection de la composition dans un réservoir de fluide (18), destiné en particulier à une solution aqueuse d'urée, étant effectuée.

7. Procédé selon l'une des revendications précédentes,
la détection de la quantité de fluide étant effectuée par détection d'un paramètre de fonctionnement d'une pompe à fluide (20), par détection d'un paramètre de fonctionnement d'un injecteur d'agent réducteur, au moyen d'un capteur de débit et/ou au moyen d'un capteur de niveau d'un réservoir de fluide (18).

8. Procédé selon l'une des revendications précédentes :
la quantité d'agent réducteur, en particulier la quantité d'ammoniac, étant déterminée sur la base d'une vitesse de rotation d'une pompe à fluide, d'une pression de refoulement de la pompe à fluide et d'un temps d'ouverture d'un injecteur d'agent réducteur.

9. Procédé selon l'une des revendications précédentes, comprenant en outre les étapes suivantes :
prendre des mesures pour réduire la fuite d'ammoniac si l'état de fuite d'ammoniac a été défini ; et/ou
réduire une quantité d'agent réducteur injecté ou à injecter, lorsque l'état de fuite d'ammoniac est défini.

10. Dispositif de post-traitement de gaz d'échappement, notamment système de post-traitement de gaz d'échappement SCR (12), comprenant :
un injecteur d'agent réducteur (16) ;
un catalyseur SCR (14) disposé en aval de l'injecteur d'agent réducteur (16) ; et
un système de surveillance (26) qui est conçu pour mettre en œuvre un procédé selon l'une des revendications précédentes.

11. Dispositif selon la revendication 10, comprenant en outre :
un premier capteur d'oxyde d'azote (28) qui est disposé en amont du convertisseur catalytique SCR (14) et qui détecte une première valeur d'oxyde d'azote ; et
un deuxième capteur d'oxyde d'azote (30) qui est disposé en aval du catalyseur SCR (14) et qui détecte une deuxième valeur d'oxyde d'azote, en particulier avec une sensibilité croisée à l'ammoniac,
le système de surveillance (26) déterminant la conversion d'oxyde d'azote comme différence entre la première valeur d'oxyde d'azote et la deuxième valeur d'oxyde d'azote.

12. Dispositif selon la revendication 10 ou 11, comprenant en outre :
un premier capteur de fluide (32) destiné à détecter une composition d'un fluide amené ou à amener à l'injecteur d'agent réducteur (16) en vue de l'injection ; et
un deuxième capteur de fluide et/ou une pompe à fluide (20) destinés à détecter une quantité d'un fluide amené ou à amener à l'injecteur d'agent réducteur (16) en vue de l'injection ;
le système de surveillance (26) déterminant la quantité d'agent réducteur, en particulier la quantité d'ammoniac, sur la base de la composition détectée et de la quantité de fluide détectée.

13. Véhicule automobile, notamment véhicule utilitaire, comprenant un dispositif selon l'une des revendications 10 à 12.
